# EUROPÄISCHE PATENTSCHRIFT

(11) **EP 4 497 034 B1**
(45) Veröffentlichungstag und Bekanntmachung des Hinweises auf die Patenterteilung: **29.07.2026**
(21) Anmeldenummer: 23709668.0
(22) Anmeldetag: 06.03.2023
(51) Int. Cl.: G03B 43/00

(54) **VERFAHREN ZUR HERSTELLUNG EINER KAMERAVORRICHTUNG UND KAMERAVORRICHTUNG FÜR EIN FAHRZEUG**
METHOD FOR PRODUCING A CAMERA DEVICE, AND CAMERA DEVICE FOR A VEHICLE
PROCÉDÉ DE PRODUCTION D'UN DISPOSITIF DE CAMÉRA ET DISPOSITIF DE CAMÉRA POUR UN VÉHICULE

(30) Priorität: 22.03.2022 DE 102022202777
(43) Veröffentlichungstag der Anmeldung: 29.01.2025
(73) Patentinhaber: Robert Bosch GmbH, 70442 Stuttgart (DE)
(72) Erfinder: WEIMERT, Markus, 87509 Immenstadt (DE); FICKLER, Johannes, 87448 Waltenhofen (DE); BRAUN, Holger, 70435 Stuttgart (DE); HETZER, Florian, 87509 Immenstadt (DE)
(86) Internationale Anmeldenummer: PCT/EP2023/055540
(87) Internationale Veröffentlichungsnummer: WO 2023/180048

(56) Entgegenhaltungen:
- WO-A1-2022/167220
- DE-A1- 102020 206 331
- US-B2- 11 194 230

## Beschreibung

Die vorliegende Erfindung betrifft ein Verfahren zur Herstellung einer Kameravorrichtung und eine Kameravorrichtung mit den Merkmalen der Oberbegriffe der unabhängigen Ansprüche.

### Stand der Technik

Die DE 10 2020 206 331 A1 offenbart ein Kameramodul für ein Kraftfahrzeug aufweisend eine Objektivanordnung mit wenigstens einem Objektiv und wenigstens einer elektrischen Kontaktfläche, eine Leiterplattenanordnung mit wenigstens einer Leiterplatte, auf welcher ein Bildsensor und wenigstens eine elektrisch leitfähige Verbindungseinheit angeordnet sind, ein Ausrichtelement, welches zwischen der Objektivanordnung und der Leiterplattenanordnung positioniert ist, so dass die Objektivanordnung in einer zum Bildsensor optisch ausgerichteten Position an der Leiterplattenanordnung befestigbar ist, und ein kraftausübendes Element, welches dazu ausgebildet ist, auf die elektrisch leitfähige Verbindungseinheit eine Kraft auszuüben, derart dass die elektrisch leitfähige Verbindungseinheit und die elektrische Kontaktfläche miteinander verbindbar sind und wenigstens ein elektrischer Strompfad ausbildbar ist, mittels dem wenigstens ein elektrischer Verbraucher an der Objektivanordnung mit der Leiterplatte elektrisch verbindbar ist.

Die US 11 194 230 B2 offenbart eine optische Vorrichtung umfassend eine Leiterplatte mit einer Bilderfassungsschaltung, eine metallische Linsenunterstützung mit mindestens einer optischen Linse, wobei die Linsenunterstützung so auf der Leiterplatte montiert ist, dass die Bilderfassungsschaltung und die optische Linse auf der optischen Achse der Vorrichtung ausgerichtet sind; weiterhin umfasst die Vorrichtung mindestens ein erstes elektrisch leitfähiges Heizelement, das sich auf der Leiterplatte befindet und in elektrischem Kontakt mit ihr steht, zwischen der Linsenunterstützung und der Leiterplatte liegt und an der Linsenunterstützung anliegt, wobei das erste Heizelement so konfiguriert ist, dass ein von der Leiterplatte kommender elektrischer Strom durch es hindurchfließt.

Die DE 10 2020 206 331 A1 offenbart ein Kameramodul für ein Kraftfahrzeug aufweisend eine Objektivanordnung mit wenigstens einem Objektiv und wenigstens einer elektrischen Kontaktfläche, eine Leiterplattenanordnung mit wenigstens einer Leiterplatte, auf welcher ein Bildsensor und wenigstens eine elektrisch leitfähige Verbindungseinheit angeordnet sind, ein Ausrichtelement, welches zwischen der Objektivanordnung und der Leiterplattenanordnung positioniert ist, so dass die Objektivanordnung in einer zum Bildsensor optisch ausgerichteten Position an der Leiterplattenanordnung befestigbar ist, und ein kraftausübendes Element, welches dazu ausgebildet ist, auf die elektrisch leitfähige Verbindungseinheit eine Kraft auszuüben, derart dass die elektrisch leitfähige Verbindungseinheit und die elektrische Kontaktfläche miteinander verbindbar sind und wenigstens ein elektrischer Strompfad ausbildbar ist, mittels dem wenigstens ein elektrischer Verbraucher an der Objektivanordnung mit der Leiterplatte elektrisch verbindbar ist.

### Offenbarung der Erfindung

Die vorliegende Erfindung geht aus von einem Verfahren zum Herstellen einer Kameravorrichtung. Das Verfahren umfasst den Schritt des Bereitstellens einer Leiterplatte mit einem darauf angeordneten Bildsensor; des Anbringens wenigstens eines elektrischen Kontaktierungselementes, welche jeweils eine elektrische Kontaktfläche aufweisen, auf der Leiterplatte; des Ausrichtens eines in einem Gehäuse der Kameravorrichtung aufgenommenen und einen elektrisch leitenden Kontaktbereich aufweisenden Objektivs in Bezug auf den Bildsensor; des Fixierens des Objektivs im Gehäuse und der Kontaktierung des elektrisch leitenden Kontaktbereichs des Objektivs mit der elektrischen Kontaktfläche des elektrischen Kontaktierungselementes.

Erfindungsgemäß weist das elektrische Kontaktierungselement einen beweglichen Federarm, an welchem die elektrische Kontaktstelle angeordnet ist und einen beweglichen Rastarm auf. Bis zum Schritt der Kontaktierung arretiert der Rastarm den Federarm in einer ersten Position. Im Schritt der Kontaktierung wird die Arretierung des Federarms durch einen temporären mechanischen Impuls auf den Rastarm mittels eines Freigabewerkzeugs gelöst.

Die mittels des Verfahrens hergestellte Kameravorrichtung kann in einem Fahrzeug genutzt werden. Im Sinne der Erfindung werden als Objektiv alle Bauteile verstanden, die fest mit dem Objektiv verbunden sind und die zusammen als Einheit während des Ausrichtens in Bezug auf den Bildsensor ausgerichtet werden. Das Objektiv weist insbesondere ein Objektivgehäuse und wenigstens eine im Objektivgehäuse angeordnete optische Linse auf. Das Objektiv kann zudem einen elektrischen Verbraucher aufweisen. Ein elektrischer Verbraucher kann beispielsweise eine Linsenheizung sein. Der elektrische Verbraucher des Objektivs kann mit dem elektrisch leitenden Kontaktbereich elektrisch verbunden sein. Der elektrische Verbraucher des Objektivs kann über den elektrisch leitenden Kontaktbereich angesteuert werden. Der elektrisch leitende Kontaktbereich des Objektivs wiederum ist mit der elektrischen Kontaktfläche des wenigstens einen elektrischen Kontaktierungselementes kontaktiert. Das wenigstens eine elektrische Kontaktierungselement wiederum ist auf der Leiterplatte angebracht. Beim Anbringen bildet sich insbesondere jeweils ein elektrischer Kontakt zwischen dem elektrischen Kontaktierungselement und der Leiterplatte aus. Somit kann mittels des hier vorgestellten Verfahrens der elektrische Verbraucher des Objektivs elektrisch mit der Leiterplatte kontaktiert werden. Der elektrische Verbraucher kann mit anderen Worten über die Leiterplatte elektrisch versorgt werden. Das elektrische Kontaktierelement ist mit anderen Worten insbesondere dazu ausgebildet, elektrische Energie von einer Leiterplatte an einen elektrischen Verbraucher, welcher einen elektrisch leitenden Kontaktbereich aufweist, zu übertragen. Der elektrische Verbraucher kann hierbei auch Teil eines anderen Bauteils als dem Objektiv sein.

Ein elektrisches Kontaktierungselement (auch kurz Kontaktierungselement) ist insbesondere als Einzelkontakt ausgebildet. Ist ein Objektivgehäuse des Objektivs aus einem metallischen Werkstoff ausgebildet, so kann genau ein auf der Leiterplatte angebrachtes elektrisches Kontaktierungselement ausreichend sein. Ist ein Objektivgehäuse des Objektivs aus einem nicht-metallischen Werkstoff ausgebildet, sind vorteilhafterweise wenigstens zwei elektrische Kontaktierungselemente auf der Leiterplatte angebracht. Hierbei können zwei Kontaktierungselemente an sich gegenüberliegenden Seiten der Leiterplatte angebracht und in Kontakt mit zwei Kontaktflächen des elektrisch leitenden Kontaktbereichs des Objektivs gebracht werden, die sich außenumfangseitig am Objektiv diametral gegenüberliegen.

Das Fixieren des Objektivs im Gehäuse erfolgt insbesondere nach dem Ausrichten des Objektivs, um die Ausrichtung des Objektivs in Bezug auf den Bildsensor zu fixieren. Das Fixieren des Objektivs im Gehäuse kann zum Beispiel mittels einer Klebeverbindung oder einer Schweißverbindung erfolgen.

Das elektrische Kontaktierungselement ist insbesondere aus elektrisch leitfähigem Material ausgebildet. Das elektrische Kontaktierungselement ist insbesondere aus einem Material mit einer Biege- und/oder Federeigenschaft ausgebildet. Hierdurch kann eine zuverlässige Kontaktierung gewährleistet werden. Das elektrische Kontaktierungselement ist insbesondere derart biegsam und/oder federnd ausgebildet, dass die Ausbildung der Kontaktierung des elektrisch leitenden Kontaktbereichs des Objektivs zuverlässig erfolgt. Der Federarm mit der elektrischen Kontaktstelle ist insbesondere überfedert ausgebildet. Hierdurch kann eine definierte Kontaktkraft auf den elektrisch leitenden Kontaktbereich des Objektivs bei der Ausbildung der Kontaktierung auch bei einem variablen Abstand zwischen dem Objektiv und dem elektrischen Kontaktierungselement sichergestellt werden. Mit anderen Worten ist eine Kontaktierung nicht nur bei einem einzigen Abstand zwischen dem Objektiv und einem elektrischen Kontaktierungselement möglich, vielmehr kann der Abstand Größen in einem vorgegebenen Bereich aufweisen. Hierdurch ist die Kontaktierung vorteilhafterweise unabhängig von der Größe des Gehäuses. Für eine verbesserte elektrische Kontaktierung kann die elektrische Kontaktfläche des elektrischen Kontaktierungselementes oberflächenbeschichtet ausgebildet sein, zum Beispiel mit einer Nickel-Gold-Legierung.

Unter einem temporären mechanischen Impuls kann ein kurzzeitiger Druck auf den Rastarm verstanden werden. Insbesondere übt das Freigabewerkzeug einen kurzzeitigen Druck auf den Rastarm aus. Beispielsweise kann der Rastarm noch einen Auslöseclip aufweisen. In diesem Fall übt das Freigabewerkzeug den temporären mechanischen Impuls auf den Auslöseclip aus.

Der Vorteil der Erfindung besteht darin, dass die Kontaktierung erst zeitlich nach dem Ausrichten des Objektivs in Bezug auf den Bildsensor erfolgt. Hierdurch kann das Ausrichten unbeeinflusst von etwaigen Kontaktkräften am Objektiv bleiben. Es kann vermieden werden, dass während des Ausrichtens Reibung zwischen dem elektrischen Kontaktierungselement und dem Objektiv auftritt. Hierdurch kann vermieden werden, dass Abrieb zum Beispiel in Form von Partikeln während des Ausrichtens entsteht, welcher den Bildsensor belegen und somit eine Bildaufnahme mittels der Kameravorrichtung negativ beeinflussen würde.

In einer vorteilhaften Ausgestaltung der Erfindung ist vorgesehen, dass im Schritt des Anbringens das elektrische Kontaktierungselement mittels eines Bestückungswerkzeugs an einer Ansaugfläche des elektrischen Kontaktierungselements angesaugt und auf einer Standfläche des elektrischen Kontaktierungselements auf der Leiterplatte positioniert wird. Im Schritt des Anbringens wird außerdem zwischen der Standfläche und der Leiterplatte eine Lötverbindung ausgebildet. Alternativ wird im Schritt des Anbringens das elektrische Kontaktierungselement in die Leiterplatte eingepresst.

Die Kontaktierungselemente können somit im Rahmen einer SMD-Bestückung (engl. für Surface Mounted Devices) auf der Leiterplatte angebracht werden. Die Kontaktierungselemente können insbesondere zusammen mit anderen Bauteilen auf der Leiterplatte angebracht werden. Vorteilhafterweise können hierdurch die Kosten für die Herstellung der Kameravorrichtung geringgehalten werden. Das Anbringen der Kontaktierungselemente kann außerdem weitestgehend unabhängig von der Größe des Gehäuses sein. Hierdurch wird die Kontaktierung universell, zum Beispiel für Kameravorrichtungen unterschiedlicher Größen, einsetzbar. Für unterschiedliche Kameravorrichtungen können dieselben Kontaktierungselemente genutzt werden. Die Ansaugfläche kann hierbei als ein Bereich des Federarms oder als ein Bereich des Rastarms ausgebildet sein. Das Bestückungswerkzeug kann insbesondere ein Vakuum-Bestückungswerkzeug sein. Für eine verbesserte elektrische Kontaktierung können die Standflächen der elektrischen Kontaktierungselemente oberflächenbeschichtet ausgebildet sein, zum Beispiel mit einer Nickel-Gold-Legierung.

Das Befestigen des Kontaktierungselements an der Leiterplatte mittels einer Lötverbindung ist hierbei prozesstechnisch einfach bei der Bestückung der Leiterplatte, zum Beispiel auch mit anderen Komponenten, realisierbar. Die Lötverbindung kann außerdem zur elektrischen Kontaktierung des elektrischen Kontaktierungselements und der Leiterplatte dienen.

Ist das Ausbilden einer Lötverbindung aufgrund vorgegebener Geometrien hingegen schwierig bis gar nicht zu realisieren, so bietet das Einpressen eine, insbesondere auch sehr stabile, Alternative zum Befestigen des Kontaktierungselements an der Leiterplatte. Hierbei weist das elektrische Kontaktierungselement insbesondere weiterhin eine Einpresskontur auf. Die Einpresskontur kann von der Standfläche zu einer der Ansaugfläche abgewandten Seite hin ausgerichtet sein. In der Durchgangsöffnung der Leiterplatte ist insbesondere weiterhin eine Hülse mit einer auf einer Unterseite der Leiterplatte, von der Hülse wegführenden Leiterbahn angeordnet. Die Einpresskontur des elektrischen Kontaktierungselements kann in die Durchgangsöffnung der Leiterplatte eingepresst angeordnet sein. Hierbei können die Einpresskontur und die Hülse in der Durchgangsöffnung in elektrischem Kontakt stehen.

In einer weiteren vorteilhaften Ausgestaltung der Erfindung ist vorgesehen, dass das elektrische Kontaktierungselement in oder in der Nähe der Standfläche einen Durchlass aufweist, und wobei die Leiterplatte wenigstens eine Durchgangsöffnung aufweist und wobei das elektrische Kontaktierungselement im Schritt des Anbringens derart auf der Leiterplatte positioniert wird, dass der Durchlass und die Durchgangsöffnung aneinander angrenzen. Zum Auslösen des temporären mechanischen Impulses wird das Freigabewerkzeug ausgehend von einer dem Objektiv abgewandten Seite der Leiterplatte durch die Durchgangsöffnung der Leiterplatte und den angrenzenden Durchlass des elektrischen Kontaktierelement eingeschoben. Hierbei weist die Leiterplatte insbesondere für jedes auf ihr angebrachte elektrische Kontaktierungselement genau eine Durchgangsöffnung auf.

Diese Art des Lösens der Arretierung kann insbesondere dann eingesetzt werden, wenn der elektrisch leitende Kontaktbereich außenumfangseitig am Objektiv angeordnet ist. Das Freigabewerkzeug ist derart dimensioniert, dass es durch die Durchgangsöffnung und den Durchlass so weit eingeschoben werden kann, dass es den Rastarm trifft. Das Freigabewerkzeug kann beispielsweise als ein Stift ausgebildet sein. Der Durchmesser des Stifts ist insbesondere etwas kleiner als der Durchmesser der Durchgangsöffnung und der Durchmesser des Durchlasses. Der Stift ist insbesondere derart lang ausgebildet, dass er den Rastarm trifft und den temporären mechanischen Impuls auf den Rastarm bewirken kann. Der Vorteil dieser Ausgestaltung besteht darin, dass der Schritt der Kontaktierung das ausgerichtete und fixierte Objektiv nicht beeinflusst. Außerdem kann das Freigabewerkzeug präzise durch die Durchgangsöffnung und den Durchlass geführt werden. Ein Verrutschen des Freigabewerkzeugs beim Einschieben durch die Durchgangsöffnung und den Durchlass kann verhindert werden. Hierdurch kann sichergestellt werden, dass das Freigabewerkzeug einen ausreichend großen Druck auf den Rastarm ausübt. Die Arretierung kann zuverlässig gelöst werden. Dies ist insbesondere bei einer Massenproduktion der Kameravorrichtung von großem Vorteil.

In einer weiteren vorteilhaften Ausgestaltung der Erfindung ist vorgesehen, dass die Leiterplatte wenigstens eine Durchgangsöffnung aufweist und wobei das elektrische Kontaktierungselement im Schritt des Anbringens derart auf der Leiterplatte positioniert wird, dass wenigstens ein Teil des Rastarms durch die Durchgangsöffnung zu einer dem Objektiv abgewandten Seite hin zeigt; und wobei zum Auslösen des temporären mechanischen Impulses das Freigabewerkzeug auf der dem Objektiv abgewandten Seite parallel zur Leiterplatte entlang geschoben wird. Hierbei weist die Leiterplatte insbesondere für jedes auf ihr angebrachte elektrische Kontaktierungselement genau eine Durchgangsöffnung auf.

Diese Art des Lösens der Arretierung kann insbesondere dann eingesetzt werden, wenn der elektrisch leitende Kontaktbereich auf einer der Leiterplatte zugewandten Seite des Objektivs angeordnet ist. Das Freigabewerkzeug kann beispielsweise als ein Stift ausgebildet sein. Der Stift ist insbesondere derart lang ausgebildet, dass er den Rastarm trifft und den temporären mechanischen Impuls auf den Rastarm bewirken kann. Der Vorteil dieser Ausgestaltung besteht darin, dass der Schritt der Kontaktierung das ausgerichtete und fixierte Objektiv nicht beeinflusst. Die Arretierung kann zuverlässig gelöst werden. Dies ist insbesondere bei einer Massenproduktion der Kameravorrichtung von großem Vorteil.

In einer weiteren vorteilhaften Ausgestaltung der Erfindung umfasst das Verfahren den weiteren Schritt des Anordnens und Befestigens eines Deckels am Gehäuse der Kameravorrichtung auf einer dem Objektiv abgewandten Seite. Der Deckel kann hierbei eine Öffnung aufweisen, durch die ein Stecker in den Deckel eingeschoben werden kann. Mittels des Steckers kann die Leiterplatte mit einer Stromquelle außerhalb der Kameravorrichtung kontaktiert werden.

Die Erfindung geht weiterhin aus von einer Kameravorrichtung für ein Fahrzeug aufweisend eine Leiterplatte mit einem darauf angeordneten Bildsensor; wenigstens ein, auf der Leiterplatte angebrachtes elektrisches Kontaktierungselement mit einer elektrischen Kontaktfläche; ein Gehäuse; ein in dem Gehäuse aufgenommenes, zum Bildsensor ausgerichtetes und im Gehäuse fixiertes Objektiv, welches einen elektrisch leitenden Kontaktbereich aufweist; und wobei der elektrisch leitende Kontaktbereich des Objektivs mit der elektrischen Kontaktfläche des elektrischen Kontaktierungselementes kontaktiert ausgebildet ist.

Erfindungsgemäß weist das elektrische Kontaktierungselement einen beweglichen Federarm, an welchem die elektrische Kontaktstelle angeordnet ist, und einen beweglichen Rastarm auf. Hierbei ist der Rastarm dazu ausgebildet, den Federarm in einer ersten Position zu arretieren. Zur Ausbildung der Kontaktierung des elektrisch leitenden Kontaktbereichs des Objektivs mit der elektrischen Kontaktfläche des elektrischen Kontaktierungselementes ist die Arretierung des Federarmes in der Kameravorrichtung gelöst ausgebildet.

Die hier vorgestellte Kameravorrichtung ist dabei insbesondere nach dem oben beschriebenen Verfahren hergestellt.

In einer vorteilhaften Ausgestaltung der Erfindung weist jedes elektrische Kontaktierungselements eine Ansaugfläche und eine Standfläche auf, wobei zwischen jeder Standfläche und der Leiterplatte eine Lötverbindung ausgebildet ist, oder wobei die Standfläche des elektrischen Kontaktierungselements in die Leiterplatte eingepresst ist. Die Ansaugflächen und die Standfläche eines jeden elektrischen Kontaktierungselements sind jeweils insbesondere parallel zueinander ausgerichtet.

In einer weiteren vorteilhaften Ausgestaltung der Erfindung weist das elektrische Kontaktierungselement in oder in der Nähe der Standfläche einen Durchlass auf, wobei die Leiterplatte wenigstens eine Durchgangsöffnung aufweist, und wobei das elektrische Kontaktierungselement derart auf der Leiterplatte positioniert ist, dass der Durchlass und die Durchgangsöffnung aneinander angrenzen. Hierbei weist die Leiterplatte insbesondere für jedes auf ihr angebrachte elektrische Kontaktierungselement genau eine Durchgangsöffnung auf.

In einer weiteren vorteilhaften Ausgestaltung der Erfindung weist die Leiterplatte wenigstens eine Durchgangsöffnung auf, wobei das elektrische Kontaktierungselement derart auf der Leiterplatte angebracht ist, dass wenigstens ein Teil des Rastarms durch die Durchgangsöffnung zu einer dem Objektiv abgewandten Seite hinzeigt. Das Kontaktierungselement kann in dieser Ausgestaltung auch in oder in der Nähe der Standfläche einen Durchlass aufweisen. Dieser Durchlass wäre in diesem Fall nicht für das Lösen der Arretierung notwendig, kann jedoch beim Ausbilden der Lötverbindung zwischen der Standfläche und der Leiterplatte sowie für eine bessere Positionierung vorteilhaft sein. Hierbei weist die Leiterplatte insbesondere für jedes auf ihr angebrachte elektrische Kontaktierungselement genau eine Durchgangsöffnung auf.

In einer weiteren vorteilhaften Ausgestaltung der Erfindung sind der Rastarm und der Federarm des elektrischen Kontaktierungselements an gegenüberliegenden Seiten der Standfläche oder an benachbarten Seiten der Standfläche angeordnet. Ist die Standfläche des elektrischen Kontaktierungselements viereckig ausgebildet, so sind bei der ersten Alternative der Rastarm und der Federarm einander zugewandt angeordnet. Die erste Alternative weist hierbei den Vorteil auf, dass das Kontaktierungselements einfacher herstellbar ist. Ist die Standfläche des elektrischen Kontaktierungselements viereckig ausgebildet, so sind bei der zweiten Alternative der Rastarm und der Federarm in einem Winkel von 90° zueinander angeordnet. Die zweite Alternative weist hierbei den Vorteil auf, dass eine bessere Steifigkeit erreicht werden kann.

Der Rastarm und der Federarm sind insbesondere jeweils von der Standfläche her aufragend angeordnet. Hierbei kann zum Beispiel der Rastarm zweiteilig ausgebildet sein, wobei der erste Teil des Rastarms von der Standfläche her aufragend angeordnet ist und wobei der zweite Teil des Rastarms auf einer der Standfläche gegenüberliegenden Seite des Kontaktierungselements parallel zur Standfläche ausgebildet ist. Der zweite Teil des Rastarm kann hierbei die Ansaugfläche des Kontaktierungselements umfassen. Alternativ kann zum Beispiel der Federarm zweiteilig ausgebildet sein, wobei der erste Teil des Federarms von der Standfläche her aufragend angeordnet ist und wobei der zweite Teil des Federarms auf einer der Standfläche gegenüberliegenden Seite des Kontaktierungselements parallel zur Standfläche ausgebildet ist. Der zweite Teil des Federarms kann hierbei die Ansaugfläche des Kontaktierungselements umfassen. Der zweite Teil des Federarms kann hierbei weiterhin eine Verlängerung aufweisen, wobei die Verlängerung die elektrische Kontaktfläche umfasst.

Der Rastarm kann flach ausgebildet sein. Insbesondere kann der erste Teil des Rastarms und/oder der zweite Teil des Rastarms flach ausgebildet sein. Der Rastarm bzw. ein Teil des Rastarms kann alternativ auch zumindest teilweise gewölbt ausgebildet sein. Der Rastarm weist insbesondere einen Befestigungsbereich auf. Der Befestigungsbereich ist zur Arretierung des Federarms ausgebildet.

Der Federarm kann flach ausgebildet sein. Insbesondere kann der erste Teil des Federarms und/oder der zweite Teil des Federarms flach ausgebildet sein. Alternativ kann der Federarm bzw. ein Teil des Federarms auch zumindest teilweise gewölbt ausgebildet sein. Eine Wölbung des Federarms kann in vorteilhafter Weise die Biege- und/oder Federeigenschaft des Federarms verbessern. Der Federarm weist insbesondere einen Arretierungsbereich auf. Der Arretierungsbereich ist insbesondere zum Wechselwirken mit dem Befestigungsbereich des Rastarms zur Arretierung des Federarms ausgebildet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Nachfolgend werden Ausführungsbeispiele der vorliegenden Erfindung anhand der beiliegenden Zeichnungen näher erläutert. Gleiche Bezugszeichen in den Figuren bezeichnen gleiche oder gleichwirkende Elemente. Es zeigen:
- Figur 1: ein Ausführungsbeispiel eines Verfahrens zum Herstellen einer Kameravorrichtung;
- Figur 2A, B: beispielhaft den Schritt der Kontaktierung des elektrisch leitenden Kontaktbereichs des Objektivs mit der elektrischen Kontaktfläche des elektrischen Kontaktierungselementes;
- Figur 3A: ein weiteres Ausführungsbeispiel eines elektrischen Kontaktierungselements;
- Figur 3B: beispielhaft den Schritt der Kontaktierung eines Objektivs einer Kameravorrichtung mittels des elektrischen Kontaktierungselements aus Figur 3A;
- Figur 4A: ein weiteres Ausführungsbeispiel eines elektrischen Kontaktierungselements;
- Figur 4B: einen Ausschnitt einer Kameravorrichtung mit einem elektrischen Kontaktierungselements aus Figur 4A;
- Figur 5: ein weiteres Ausführungsbeispiel eines elektrischen Kontaktierungselements;
- Figur 6: eine alternative Befestigungsmöglichkeit eines elektrischen Kontaktierungselements an der Leiterplatte.

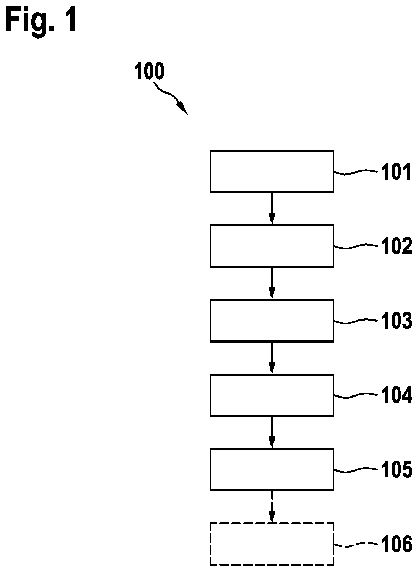

Figur 1 zeigt ein Ausführungsbeispiel eines Verfahrens zum Herstellen einer Kameravorrichtung. Die Kamera kann zum Beispiel zur Verwendung in einem Fahrzeug sein. Das Verfahren 100 umfasst die Schritte des Bereitstellens 101 eine Leiterplatte mit einem darauf angeordneten Bildsensor; des Anbringens 102 wenigstens eines elektrischen Kontaktierungselementes, welche eine elektrische Kontaktfläche aufweist, auf der Leiterplatte; des Ausrichtens 103 eines in einem Gehäuse der Kameravorrichtung aufgenommenen und einen elektrisch leitenden Kontaktbereich aufweisenden Objektivs in Bezug auf den Bildsensor; des Fixierens 104 des Objektivs im Gehäuse und der Kontaktierung 105 des elektrisch leitenden Kontaktbereichs des Objektivs mit der elektrischen Kontaktfläche des elektrischen Kontaktierungselementes. Hierbei weist das Kontaktierungselement einen beweglichen Federarm, an welchem die elektrische Kontaktstelle angeordnet ist, und einen beweglichen Rastarm auf. Bis zum Schritt der Kontaktierung 105 arretiert der Rastarm den Federarm in einer ersten Position. Im Schritt der Kontaktierung 105 wird die Arretierung des Federarms durch einen temporären mechanischen Impuls auf den Rastarm mittels eines Freigabewerkzeugs gelöst.

Insbesondere kann das Verfahren 100 den weiteren Schritt 106 des Anordnens und Befestigens eines Deckels am Gehäuse der Kameravorrichtung auf einer dem Objektiv abgewandten Seite umfassen. Das Verfahren 100 wird vor allem bezüglich des Schritts der Kontaktierung 105 anhand der nachfolgenden Figuren näher erläutert.

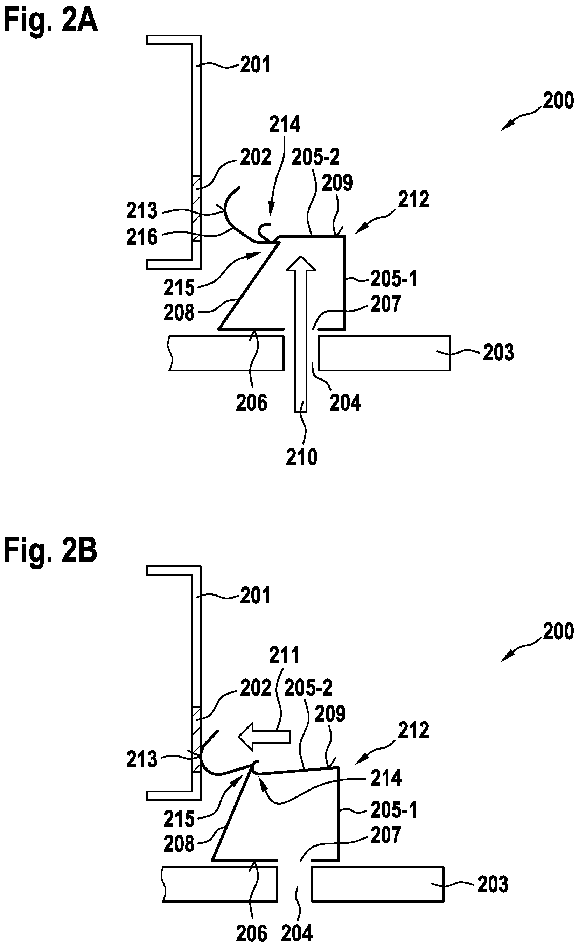

In den Figuren 2A und 2B ist ein Ausschnitt einer Kameravorrichtung 200 gezeigt, bei dem der Einfachheit halber das Gehäuse der Kameravorrichtung 200 weggelassen ist. Die Kameravorrichtung 200 weist eine Leiterplatte 203 auf. Insbesondere ist in Figur 2A die Kameravorrichtung 200 bis bzw. während des Schritts 105 der Kontaktierung des Verfahrens 100 gezeigt. Die Figur 2B zeigt die Kameravorrichtung nach dem Schritt 105 der Kontaktierung.

Ein auf der Leiterplatte angeordneter Bildsensor ist in den Figuren 2A und 2B nicht gezeigt. Die Kameravorrichtung 200 weist weiterhin ein in dem Gehäuse aufgenommenes, zum Bildsensor ausgerichtetes und im Gehäuse fixiertes Objektiv 201 auf. Das Objektiv 201 weist einen elektrisch leitenden Kontaktbereich 202 auf. Auf der Leiterplatte 203 der Kameravorrichtung 200 ist das Kontaktierungselement 212 mit einer elektrischen Kontaktfläche 213 angebracht. Im hier gezeigten Ausschnitt ist zwar lediglich ein Kontaktierungselement 212 erkennbar. Auf der Leiterplatte 203 können jedoch auch wenigstens zwei Kontaktierungselemente 212 angeordnet sein. Die nachfolgenden Erläuterungen für das eine gezeigte Kontaktierungselement 212 gelten analog auch für weitere, hier nicht gezeigte Kontaktierungselemente 212. Das elektrische Kontaktierungselement 212 der Kameravorrichtung 200 weist einen beweglichen Federarm 208, an welchem die elektrische Kontaktstelle 213 angeordnet ist, und einen beweglichen Rastarm 205 auf.

Im hier gezeigten Beispiel weist das elektrische Kontaktierungselements 212 die Ansaugfläche 209 auf. Im Schritt des Anbringens 102 des oben beschriebenen Verfahrens 100 konnte hierdurch das elektrische Kontaktierungselements 212 mittels eines Bestückungswerkzeuge an der Ansaugfläche 209 angesaugt werden. Hierdurch konnte das elektrische Kontaktierungselements 212 sehr einfach, aber auch sehr präzise auf der Leiterplatte 203 positioniert werden. Weiterhin weist das elektrische Kontaktierungselements 212 die Standfläche 206 auf. Auf dieser Standfläche 206 wurde das Kontaktierungselements 212 auf der Leiterplatte 203 positioniert. Im Schritt des Anbringens 102 konnte zum Beispiel zwischen der Standfläche 206 und der Leiterplatte 203 eine hier nicht gezeigte Lötverbindung ausgebildet werden.

Im hier gezeigten Beispiel sind der Rastarm 205 und der Federarm 208 an gegenüberliegenden Seiten der Standfläche 206 angeordnet. Der Rastarm 205 und der Federarm 208 sind jeweils von der Standfläche 206 her aufragend angeordnet. Hierbei ist der hier gezeigte Rastarm 205 zweiteilig ausgebildet. Der erste Teil 205-1 des Rastarm 205 ist von der Standfläche 206 her aufragend angeordnet. Der zweite Teil 205-2 des Rastarm 205 ist auf einer der Standfläche 206 gegenüberliegenden Seite des Kontaktierungselements 212 parallel zur Standfläche 206 ausgebildet. Der zweite Teil 205-2 des Rastarm 205 umfasst hierbei die Ansaugfläche 209. Der erste Teil 205-1 und der zweite Teil 205-2 des Rastarms 205 sind hier flach ausgebildet. Außerdem weist der Rastarm 205 an einem Ende des zweiten Teils 205-2 einen Befestigungsbereich 214 zur Arretierung des Federarms 208 auf. Der hier gezeigte Rastarm 208 ist aufragend von der Leiterplatte 203 zunächst flach ausgebildet, weist in einem der Leiterplatte 203 abgewandten Teil jedoch eine Wölbung 216 auf. In dem Bereich der Wölbung 216 ist die elektrische Kontaktfläche 213 angeordnet. Zwischen dem flachen Bereich und dem Bereich mit der Wölbung 216 weist der Federarm 208 einen Arretierungsbereich 215 zum Wechselwirken mit dem Befestigungsbereich 214 des Rastarms 205 zur Arretierung des Federarms 208 auf.

Weiterhin weist das elektrische Kontaktierungselement 212 in der Standfläche 206 einen Durchlass 207 auf. Außerdem weist die Leiterplatte 203 in dem hier gezeigten Abschnitt die Durchgangsöffnung 204 auf. Das elektrische Kontaktierungselements 212 ist derart auf der Leiterplatte 203 positioniert, dass der Durchlass 207 und die hier gezeigte Durchgangsöffnung 204 aneinander angrenzen. Dies kann vorteilhafter Weise zum Lösen der Arretierung des Federarm 208 genutzt werden, wie es im Folgenden beschrieben wird.

Die Figur 2A zeigt beispielhaft das Verfahren zur Herstellung der Kameravorrichtung 200 bis zum bzw. beim Schritt der Kontaktierung 105 des elektrisch leitenden Kontaktbereichs 202 des Objektivs 201 mit der elektrischen Kontaktfläche 213 des gezeigten elektrischen Kontaktierungselements 212. Bis zum Schritt der Kontaktierung 105 arretiert der Rastarm 205 den Federarm 208 in einer ersten Position. In dieser Position ist die Kontaktfläche 213 des elektrischen Kontaktierungselements 212 noch nicht in elektrischem Kontakt mit dem elektrisch leitenden Kontaktbereich 202 des Objektivs 201.

Im Schritt der Kontaktierung 105 wird die Arretierung des Federarms 208 durch einen temporären mechanischen Impuls, welcher hier beispielhaft durch den Pfeil 210 in Figur 2A dargestellt ist, auf den Rastarm 205 mittels eines hier nicht gezeigten Freigabewerkzeugs gelöst. Hierdurch wird der elektrisch leitende Kontaktbereich 202 des Objektivs 201 mit der elektrischen Kontaktfläche 213 des elektrischen Kontaktierungselements 212 kontaktiert ausgebildet, wie es in Figur 2B zu sehen ist. Das Kontaktierungselement 212 übt nun eine Kontaktkraft, dargestellt durch den Pfeil 211 in Figur 2B, auf den elektrisch leitenden Kontaktbereich 202 des Objektivs 201 aus. Der Schritt der Kontaktierung 105 des Verfahren 100 erfolgt für weitere elektrische Kontaktierungselemente 212 der Kameravorrichtung 200 analog.

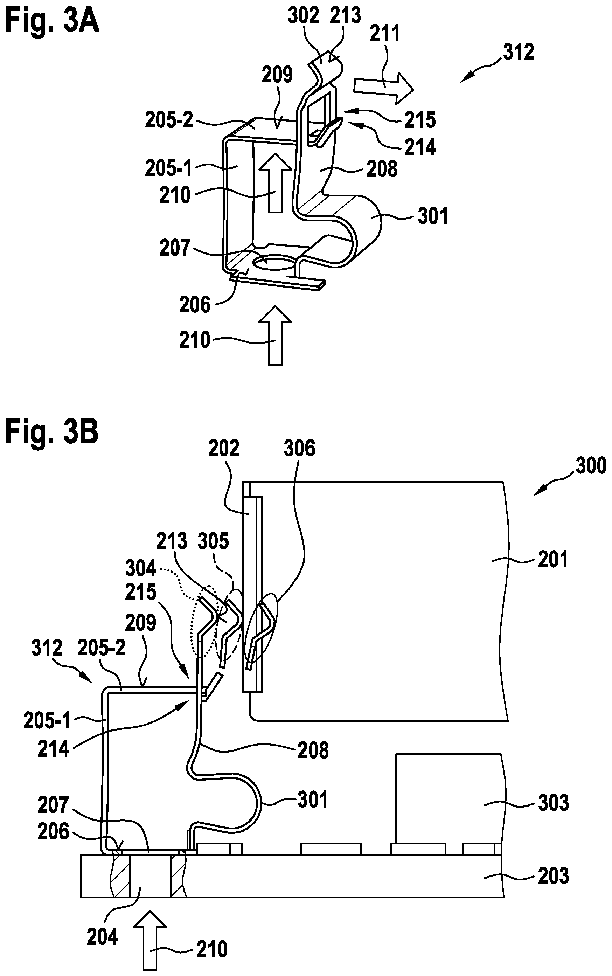

Die Figur 3A zeigt ein weiteres Ausführungsbeispiel eines elektrischen Kontaktierungselements. Das in Figur 3A gezeigte Kontaktierungselement 312 ist in weiten Teilen ähnlich dem Kontaktierungselement 212 aus Figur 2, weswegen im Folgenden hauptsächlich auf die Unterschiede eingegangen wird. Der Federarm 208 des Kontaktierungselements 312 ist auch von der Standfläche 206 her aufragend angeordnet, weist jedoch zwei Wölbungen 301 und 302 auf. Die Wölbung 301 befindet sich hierbei auf einer der Standfläche 206 zugewandten Seite des Federarms 208. Die Wölbung 301 kann zur Verbesserung der federnden Eigenschaften des Federarms 208 dienen. Die Wölbung 302 befindet sich auf einer der Standfläche 206 abgewandten Seite des Federarms 208. Die Wölbung 302 umfasst hierbei die elektrische Kontaktfläche 213. Der Arretierungsbereich 215 des Federarms 208 ist beim Kontaktierungselement 312 als eine Aussparung ausgebildet. In diese Aussparung 215 kann der Befestigungsbereich 214 des Rastarms 205 zur Arretierung des Federarms 208 eingeschoben werden bzw. eingeschoben sein. Auch das Kontaktierungselement 312 weist einen Durchlass 207 auf. Auch hier kann ein nicht gezeigtes Freigabewerkzeug durch den Durchlass 207 geschoben und einen temporären mechanischen Impuls, welcher hier wieder beispielhaft durch die Pfeile 210 dargestellt ist, auf den Rastarm 205 zum Lösen der Arretierung des Federarm 208 ausüben. Der Federarm 208 kann dann eine durch den Pfeil 211 dargestellte Kontaktkraft auf ein benachbart angeordnetes Objektiv ausüben. Der Federarm 208 kann insbesondere eine Kontaktkraft auf einen elektrisch leitenden Kontaktbereich eines benachbart angeordneten Objektivs ausüben. Dies wird für das Kontaktierungselement 312 im Nachfolgenden noch einmal anhand der Figur 3B erläutert.

Figur 3B zeigt beispielhaft den Schritt der Kontaktierung 105 eines Objektivs einer Kameravorrichtung 300 gemäß dem Verfahren 100 mittels des elektrischen Kontaktierungselements 312 aus Figur 3A. Auch Figur 3B weist viele Ähnlichkeiten zu den Figuren 2A und 2B auf, so dass im Folgenden hauptsächlich auf die Unterschiede eingegangen wird. So ist in der Figur 3B beispielsweise auch der auf der Leiterplatte 203 angeordnete Bildsensor 303 erkennbar. Außerdem ist gezeigt, wie sich die Positionen des Federarms 208 durch die Kontaktierung 105 verändern. So ist der Federarm 208 bis zum Schritt der Kontaktierung 105 in einer ersten Position 304 arretiert. Nach dem Lösen des Federarms 208 befindet sich der Federarm in einer zweiten Position, bei der die elektrische Kontaktfläche 213 des Kontaktierungselements 312 den elektrisch leitenden Kontaktbereich 202 des Objektivs 201 kontaktiert. Dieses ist beispielhaft durch den mit 305 markierten Kreis angedeutet, in dem nur der Bereich des Federarms gezeigt ist, der die Wölbung 302 und die elektrische Kontaktfläche 213 aufweist. Der mit 306 markierte Kreis deutet außerdem an, in welcher Position der Federarm 208 nach dem Lösen der Arretierung sein würde, wenn das Objektiv 201 nicht neben dem Kontaktierungselements 312 angeordnet wäre.

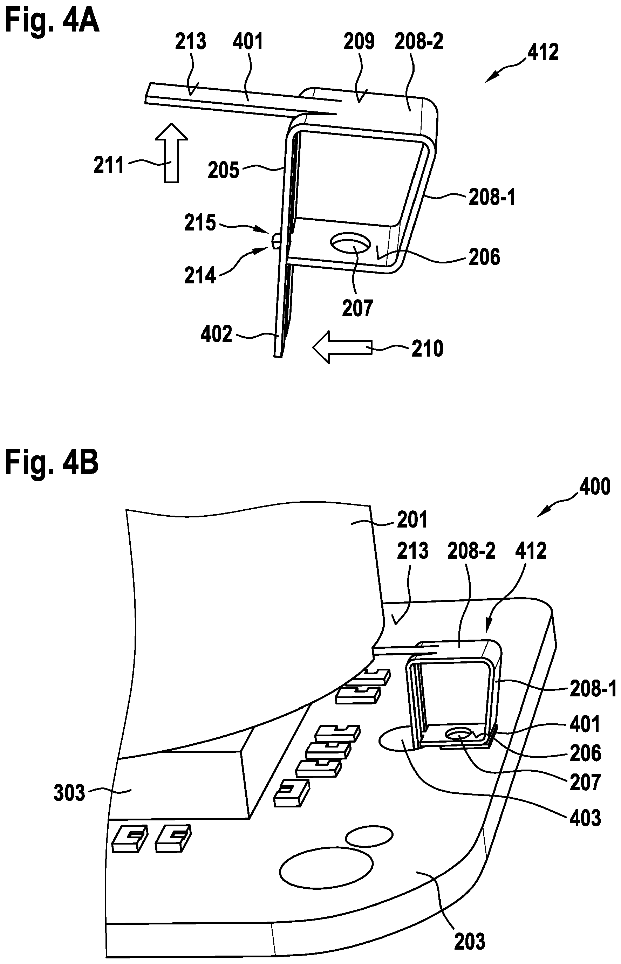

Figur 4A zeigt als ein weiteres Ausführungsbeispiel das elektrische Kontaktierungselement 412. Auch hier wird wieder hauptsächlich auf die Unterschiede zu den Kontaktierungselements 212 und 312 eingegangen. Auch das Kontaktierungselements 412 weist eine Standfläche 206 mit einem Durchlass 207 auf. Der Rastarm 205 und der Federarm 208 sind an gegenüberliegenden Seiten der Standfläche 206 und von der Standfläche 206 her aufragend angeordnet. Sowohl der Rastarm 205 als auch der Federarm 208 sind flach ausgebildet. Sie weisen in diesem Ausführungsbeispiel keine Wölbungen auf. Aber auch eine Ausführung mit wenigstens einer Wölbung im Rastarm 205 und/oder Federarm 208 ist denkbar. Beim Kontaktierungselement 412 ist der Federarm 208 zweiteilig ausgebildet. Der erste Teil 208-1 des Federarms 208 ist von der Standfläche 206 her aufragend angeordnet. Der zweite Teil 208-2 des Federarms 208 ist auf einer der Standfläche 206 gegenüberliegenden Seite des Kontaktierungselements 412 parallel zur Standfläche 206 ausgebildet. Der zweite Teil 208-2 des Federarms 208 umfasst hierbei die Ansaugfläche 209. Weiterhin weist der zweite Teil 208-2 des Federarms 208 des hier gezeigten Kontaktierungselements 412 eine Verlängerung 401 auf. Die Verlängerung 401 umfasst die elektrische Kontaktfläche 213. Außerdem kann beim Kontaktierungselement 412 auch die Standfläche 206 als Teil des Federarms 208 aufgefasst werden. An einer dem ersten Teil 208-1 des Federarms 208 abgewandten Seite der Standfläche 206 ist der Arretierungsbereich 215 des Federarms 208 angeordnet.

Der Rastarm 205 des Kontaktierungselements 412 weist ebenso eine Verlängerung 402 auf. Die Verlängerung 402 erstreckt sich ausgehend von der Standfläche 206 zu einer von der Ansaugfläche 209 abgewandten Seite hin. Der Befestigungsbereich 214 des Rastarms 205 ist beim Kontaktierungselement 412 als eine Aussparung ausgebildet. In diese Aussparung kann der Arretierungsbereich 215 des Federarms 208 zur Arretierung des Federarms 208 eingeschoben werden bzw. eingeschoben sein.

Im Schritt der Kontaktierung 105 des oben beschriebenen Verfahrens 100 wird bei dem hier beschriebenen Kontaktierungselement 412 ein temporärer mechanischer Impuls, dargestellt durch den Pfeil 210, auf die Verlängerung 402 des Rastarms 205 ausgeübt, wodurch die Arretierung des Federarms 208 gelöst wird. Die Verlängerung 401 des Federarms 208 bewegt sich hierdurch von der Standfläche 206 nach oben hin weg und kann eine Kontaktkraft 211 auf ein benachbart angeordnetes Objektiv ausüben. Der Federarm 208 kann insbesondere eine Kontaktkraft auf einen elektrisch leitenden Kontaktbereich eines benachbart angeordneten Objektivs ausüben.

Figur 4B zeigt einen Ausschnitt einer Kameravorrichtung 400 mit einem elektrischen Kontaktierungselement aus Figur 4A. Auch hier wird im Folgenden hauptsächlich auf die Unterschiede zu den Figuren 2A und 2B, sowie 3B eingegangen. Das elektrische Kontaktierungselement 412 ist auf seiner Standfläche 206 auf der Leiterplatte 203 positioniert und mittels der hier erkennbaren Lötverbindung 401 fest an der Leiterplatte 203 angeordnet. Auch die Leiterplatte 203 der Kameravorrichtung 400 weist eine Durchgangsöffnung 403 auf, welche im Zusammenhang mit dem Lösen der Arretierung des Federarms bis 208 steht. Im Gegensatz zu den Kameravorrichtungen 200 und 300 ist das elektrische Kontaktierungselement 412 hier jedoch derart auf der Leiterplatte 203 positioniert, dass wenigstens ein Teil des Rastarms 205 durch die Durchgangsöffnung 403 zu einer dem Objektiv 201 abgewandten Seite hinzeigt. Insbesondere zeigt die Verlängerung 402 des Rastarm 205 durch die Durchgangsöffnung 403. Zum Auslösen des temporären mechanischen Impulses wird bzw. wurde ein Freigabewerkzeug auf der dem Objektiv 201 abgewandten Seite der Leiterplatte 203 parallel zur Leiterplatte entlang geschoben. Die Arretierung wird bzw. wurde somit durch einen seitlichen Kraftimpuls unterhalb der Leiterplatte 203 gelöst. Hierdurch kommt es zur Kontaktierung des elektrisch leitenden Kontaktbereichs des Objektivs 201 mit der elektrischen Kontaktfläche 213 des Kontaktierungselements 412. Wie aus Figur 4B deutlich wird, befindet sich in diesem Beispiel der elektrisch leitende Kontaktbereich des Objektivs 201 nicht außenseitig am Objektiv 201, sondern auf einer der Leiterplatte 203 zugewandten Seite. Mit anderen Worten befindet sich der elektrisch leitende Kontaktbereich des Objektivs 201 auf einer Unterseite des Objektivs 201. Wie oben bereits beschrieben bewegt sich der Federarm 208 beim Lösen der Arretierung nach oben hin weg, so dass die elektrische Kontaktfläche des Kontaktierungselements 412 den elektrisch leitenden Kontaktbereich des Objektivs 201 kontaktiert.

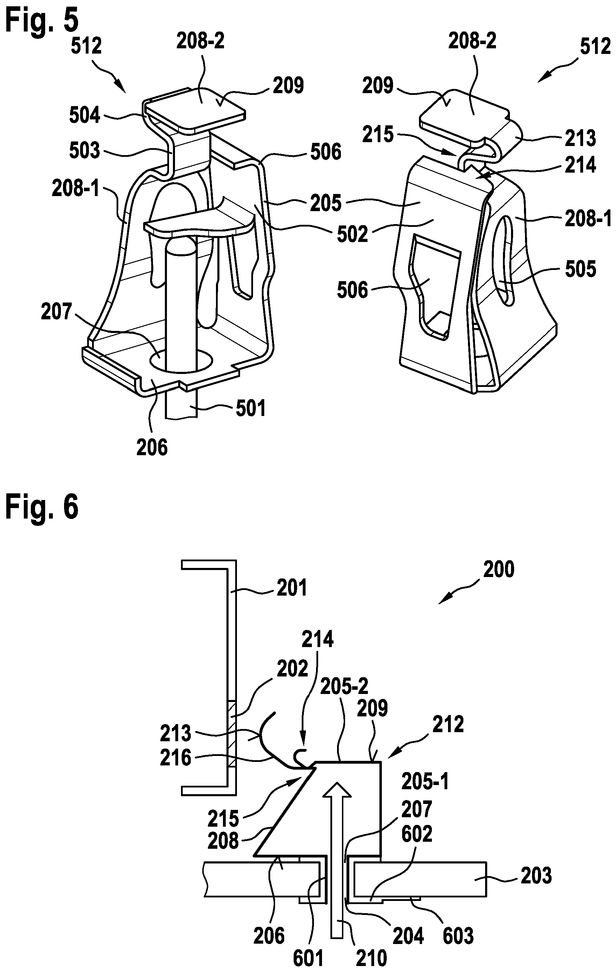

Figur 5 zeigt als ein weiteres Ausführungsbeispiel das elektrische Kontaktierungselement 512, gezeigt aus zwei Blickrichtungen. Das elektrische Kontaktierungselement 512 weist wiederum einen beweglichen Federarm 208, an welchem die elektrische Kontaktstelle 213 angeordnet ist, und einen beweglichen Rastarm 205 auf. Das elektrische Kontaktierungselement 512 weist eine Standfläche 206 mit einem Durchlass 207 auf. Der Rastarm 205 und der Federarm 208 sind bei diesem Ausführungsbeispiel an benachbarten Seiten der im Wesentlichen viereckig ausgebildeten Standfläche 206 angeordnet. Der Rastarm 205 und der Federarm 208 sind wiederum jeweils von der Standfläche 206 her aufragend angeordnet. Der Federarm 208 ist hier zweiteilig ausgebildet. Der erste Teil 208-1 des Federarms 208 ist von der Standfläche 206 her aufragend angeordnet. Der zweite Teil 208-2 des Federarms 208 ist auf einer der Standfläche 206 gegenüberliegenden Seite des Kontaktierungselements 512 parallel zur Standfläche 206 ausgebildet. Der zweite Teil 208-2 des Federarms 208 umfasst hierbei die Ansaugfläche 209. Der zweite Teil 208-2 des Federarms 208 ist hierbei flach ausgebildet. Der erste Teil 208-1 des Federarms 208 hingegen weist die Wölbungen 503 und 504 auf. Die Wölbung 503 ist hierbei insbesondere Teil des Arretierungsbereichs 215 des Federarms 208. In dem Bereich der zweiten Wölbung 504 ist die elektrische Kontaktfläche 213 angeordnet. Der Federarm 208 weist außerdem in seinem ersten Teil 208-1 noch den Aussparungsbereich 505 auf. Der Rastarm 205 des elektrischen Kontaktierungselements 512 ist weitestgehend flach ausgebildet und weist lediglich an einem der Standfläche 206 gegenüberliegenden Ende die Wölbung 506 auf. Die Wölbung 506 ist hierbei Teil des Befestigungsbereichs 214 des Rastarms 205 zur Arretierung des Federarms 208. Zum Lösen der Arretierung kann, wie im linken Teil der Figur 5 gezeigt, ein Freigabewerkzeug 501 durch den Durchlass 207 des Kontaktierungselements 512 geführt werden. Hierbei trifft das Freigabewerkzeug 501 auf einen Auslöseclip 502. Der Auslöseclip 502 ist Teil des Rastarms 205. Der Auslöseclip 502 ist hier derart aus dem Rastarm 205 ausgeschnitten, dass ein Aussparungsbereich 506 im Rastarm 205 ausgebildet ist. Durch den hierdurch auftretenden temporären mechanischen Impuls auf den Rastarm 205 wird die Arretierung des Federarm 208 gelöst.

In den Ausführungsbeispielen der Figuren 2A und 2B, 3B und 4B sind die elektrischen Kontaktierungselemente derart an der Leiterplatte angebracht, dass zwischen der Standfläche 206 und der Leiterplatte 203 eine Lötverbindung ausgebildet ist. Figur 6 zeigt eine alternative Befestigungsmöglichkeit eines elektrischen Kontaktierungselements 212 an der Leiterplatte 203. Diese Alternative kann auch auf die in den 2A und 2B, 3B und 4B gezeigten Kontaktierungselemente 212, 312 und 412 und auch bei der Befestigung des in Figur 5 gezeigten Kontaktierungselements 512 angewendet werden.

Figur 6 ähnelt hierbei in weiten Teilen der Figur 2A, so dass im Folgenden nur die Unterschiede beschrieben werden. Das elektrische Kontaktierungselement 212 weist in diesem Beispiel noch eine Einpresskontur 601 auf. Die Einpresskontur 601 ist hierbei von der Standfläche 206 zu einer der Ansaugfläche 209 abgewandten Seite hin ausgerichtet. In der Durchgangsöffnung 204 der Leiterplatte 203 ist weiterhin eine Hülse 602 mit einer auf einer Unterseite der Leiterplatte 203, von der Hülse 602 wegführenden Leiterbahn 603 angeordnet. Im Schritt des Anbringens des elektrischen Kontaktierungselements 212 auf der Leiterplatte 203 kann das elektrische Kontaktierungselement 212 in die Leiterplatte 203 eingepresst werden. Figur 6 zeigt, wie das elektrische Kontaktierungselement 212 bereits in die Leiterplatte 203 eingepresst ist. Hierbei ist die Einpresskontur 601 in die Durchgangsöffnung 204 der Leiterplatte 203 eingepresst angeordnet. Die Einpresskontur 601 ist derart in der Durchgangsöffnung 204 der Leiterplatte 203 angeordnet, dass sie in elektrischem Kontakt mit der Hülse 602 steht.

## Patentansprüche

1. Verfahren (100) zum Herstellen einer Kameravorrichtung (200, 300, 400) umfassend die folgenden Schritte:
• Bereitstellen (101) einer Leiterplatte (203) mit einem darauf angeordneten Bildsensor (303);
• Anbringen (102) wenigstens eines elektrisches Kontaktierungselements (212, 312, 412, 512), welches eine elektrische Kontaktfläche (213) aufweist, auf der Leiterplatte (209);
• Ausrichten (103) eines in einem Gehäuse der Kameravorrichtung (200, 300, 400) aufgenommenen und einen elektrisch leitenden Kontaktbereich (202) aufweisenden Objektivs (201) in Bezug auf den Bildsensor (303);
• Fixieren (104) des Objektivs (201) im Gehäuse; und
• Kontaktierung (105) des elektrisch leitenden Kontaktbereichs (202) des Objektivs (201) mit der elektrischen Kontaktfläche (213) des elektrischen Kontaktierungselements (212, 312, 412, 512);
**dadurch gekennzeichnet, dass**
• das elektrische Kontaktierungselement (212, 312, 412, 512) einen beweglichen Federarm (208), an welchem die elektrische Kontaktstelle (213) angeordnet ist, und einen beweglichen Rastarm (205) aufweist; und
• wobei bis zum Schritt der Kontaktierung (105) der Rastarm (205) den Federarm (208) in einer ersten Position (304) arretiert;
• und wobei im Schritt der Kontaktierung (105) die Arretierung des Federarms (208) durch einen temporären mechanischen Impuls (210) auf den Rastarm (205) mittels eines Freigabewerkzeugs (501) gelöst wird.

2. Verfahren (100) nach Anspruch 1, wobei im Schritt des Anbringens (102) das elektrische Kontaktierungselement (212, 312, 412, 512) mittels eines Bestückungswerkzeugs an einer Ansaugfläche (209) des elektrischen Kontaktierungselements (212, 312, 412, 512) angesaugt und auf einer Standfläche (206) des elektrischen Kontaktierungselements (212, 312, 412, 512) auf der Leiterplatte (203) positioniert wird; und wobei zwischen der Standfläche (206) und der Leiterplatte (203) eine Lötverbindung (401) ausgebildet wird oder wobei das elektrische Kontaktierungselement (212, 312, 412, 512) in die Leiterplatte (203) eingepresst wird.

3. Verfahren (100) nach Anspruch 2, wobei das elektrische Kontaktierungselement (212, 312, 512) in oder in der Nähe der Standfläche (206) einen Durchlass (207) aufweist, und wobei die Leiterplatte (203) wenigstens eine Durchgangsöffnung (204) aufweist und wobei das elektrische Kontaktierungselement (212, 312, 512) im Schritt des Anbringens (102) derart auf der Leiterplatte (203) positioniert wird, dass der Durchlass (207) und die Durchgangsöffnung (204) aneinander angrenzen; und wobei zum Auslösen des temporären mechanischen Impulses (210) das Freigabewerkzeug (501) ausgehend von einer dem Objektiv (201) abgewandten Seite der Leiterplatte (203) durch die Durchgangsöffnung (204) der Leiterplatte (203) und den angrenzenden Durchlass (207) des elektrischen Kontaktierungselements (212, 312, 512) eingeschoben wird.

4. Verfahren (100) nach Anspruch 1 oder 2, wobei die Leiterplatte (203) wenigstens eine Durchgangsöffnung (403) aufweist und wobei das elektrische Kontaktierungselement (412) im Schritt des Anbringens (102) derart auf der Leiterplatte (203) positioniert wird, dass wenigstens ein Teil des Rastarms (205) durch die Durchgangsöffnung (403) zu einer dem Objektiv (201) abgewandten Seite hin zeigt; und wobei zum Auslösen des temporären mechanischen Impulses (210) das Freigabewerkzeug auf der dem Objektiv (201) abgewandten Seite parallel zur Leiterplatte (203) entlang geschoben wird.

5. Kameravorrichtung (200, 300, 400) für ein Fahrzeug aufweisend
• eine Leiterplatte (203) mit einem darauf angeordneten Bildsensor (303);
• wenigstens ein, auf der Leiterplatte (203) angebrachtes elektrisches Kontaktierungselement (212, 312, 412, 512) mit einer elektrischen Kontaktfläche (213);
• ein Gehäuse;
• ein in dem Gehäuse aufgenommenes, zum Bildsensor (303) ausgerichtetes und im Gehäuse fixiertes Objektiv (201), welches einen elektrisch leitenden Kontaktbereich (202) aufweist; und wobei
• der elektrisch leitende Kontaktbereich (202) des Objektivs (201) mit der elektrischen Kontaktfläche (213) des elektrischen Kontaktierungselements (212, 312, 412, 512) kontaktiert ausgebildet ist;
**dadurch gekennzeichnet, dass**
• das elektrische Kontaktierungselement (212, 312, 412, 512) einen beweglichen Federarm (208), an welchem die elektrische Kontaktstelle (213) angeordnet ist, und einen beweglichen Rastarm (205) aufweist; und wobei
• der Rastarm (205) dazu ausgebildet ist, den Federarm (208) in einer ersten Position (304) zu arretieren; und wobei
• zur Ausbildung der Kontaktierung des elektrisch leitenden Kontaktbereichs (202) des Objektivs (201) mit der elektrischen Kontaktfläche (213) des elektrischen Kontaktierungselements (212, 312, 412, 512) die Arretierung des Federarms (208) in der Kameravorrichtung (200, 300, 400) gelöst ausgebildet ist.

6. Kameravorrichtung (200, 300, 400) nach Anspruch 5, wobei das elektrische Kontaktierungselement (212, 312, 412, 512) eine Ansaugfläche (209) und eine Standfläche (206) aufweist; und wobei zwischen der Standfläche (206) und der Leiterplatte (203) eine Lötverbindung (401) ausgebildet ist, oder wobei die Standfläche (206) des elektrischen Kontaktierungselements (212, 312, 412, 512) in die Leiterplatte (203) eingepresst ist.

7. Kameravorrichtung (200, 300) nach Anspruch 6, wobei das elektrische Kontaktierungselement (212, 312, 512) in oder in der Nähe der Standfläche (206) einen Durchlass (207) aufweist, und wobei die Leiterplatte (203) wenigstens eine Durchgangsöffnung (204) aufweist, und wobei das elektrische Kontaktierungselement (212, 312, 512) derart auf der Leiterplatte (203) positioniert ist, dass der Durchlass (207) und die Durchgangsöffnung (204) aneinander angrenzen.

8. Kameravorrichtung (400) nach Anspruch 5 oder 6, wobei die Leiterplatte (203) wenigstens eine Durchgangsöffnung (403) aufweist und wobei das elektrische Kontaktierungselement (412) derart auf der Leiterplatte (203) angebracht ist, dass wenigstens ein Teil des Rastarms (205) durch die Durchgangsöffnung (403) zu einer dem Objektiv (201) abgewandten Seite hinzeigt.

9. Kameravorrichtung (200) nach einem Ansprüche 6 bis 8, wobei der Rastarm (205) und der Federarm (208) des elektrischen Kontaktierungselements (212, 312, 412, 512) an gegenüberliegenden Seiten der Standfläche (206) oder an benachbarten Seiten der Standfläche (206) angeordnet sind.

## Claims

1. Method (100) for producing a camera device (200, 300, 400), comprising the following steps:
• providing (101) a printed circuit board (203) having an image sensor (303) arranged thereon;
• mounting (102) at least one electrical contacting element (212, 312, 412, 512), which has an electrical contact surface (213), on the printed circuit board (209);
• aligning (103) a lens (201), which is accommodated in a housing of the camera device (200, 300, 400) and has an electrically conductive contact region (202), with respect to the image sensor (303);
• fixing (104) the lens (201) in the housing; and
• contacting (105) the electrically conductive contact region (202) of the lens (201) with the electrical contact surface (213) of the electrical contacting element (212, 312, 412, 512);
**characterized in that**
• the electrical contacting element (212, 312, 412, 512) has a movable spring arm (208), on which the electrical contact point (213) is arranged, and a movable latching arm (205); and
• wherein the latching arm (205) locks the spring arm (208) in a first position (304) until the step of contacting (105);
• and wherein, in the step of contacting (105), the locking of the spring arm (208) is released by a temporary mechanical impulse (210) applied to the latching arm (205) by means of a release tool (501).

2. Method (100) according to Claim 1, wherein, in the step of mounting (102), the electrical contacting element (212, 312, 412, 512), by means of a fitting tool, is sucked up at a suction surface (209) of the electrical contacting element (212, 312, 412, 512) and positioned on a standing surface (206) of the electrical contacting element (212, 312, 412, 512) on the printed circuit board (203); and wherein a solder connection (401) is formed between the standing surface (206) and the printed circuit board (203) or wherein the electrical contacting element (212, 312, 412, 512) is pressed into the printed circuit board (203).

3. Method (100) according to Claim 2, wherein the electrical contacting element (212, 312, 512) has a passage (207) in or in the vicinity of the standing surface (206), and wherein the printed circuit board (203) has at least one through-opening (204) and wherein, in the step of mounting (102), the electrical contacting element (212, 312, 512) is positioned on the printed circuit board (203) such that the passage (207) and the through-opening (204) adjoin one another; and wherein, for triggering the temporary mechanical impulse (210), the release tool (501) is inserted from a side of the printed circuit board (203) facing away from the lens (201) through the through-opening (204) of the printed circuit board (203) and the adjoining passage (207) of the electrical contacting element (212, 312, 512).

4. Method (100) according to Claim 1 or 2, wherein the printed circuit board (203) has at least one through-opening (403) and wherein, in the step of mounting (102), the electrical contacting element (412) is positioned on the printed circuit board (203) such that at least a part of the latching arm (205) points through the through-opening (403) to a side facing away from the lens (201); and wherein, for triggering the temporary mechanical impulse (210), the release tool is pushed parallel to the printed circuit board (203) along the side facing away from the lens (201).

5. Camera device (200, 300, 400) for a vehicle, having
• a printed circuit board (203) having an image sensor (303) arranged thereon;
• at least one electrical contacting element (212, 312, 412, 512) mounted on the printed circuit board (203) and having an electrical contact surface (213);
• a housing;
• a lens (201), which is accommodated in the housing, aligned with the image sensor (303) and fixed in the housing and has an electrically conductive contact region (202); and wherein
• the electrically conductive contact region (202) of the lens (201) is designed to be contacted with the electrical contact surface (213) of the electrical contacting element (212, 312, 412, 512);
**characterized in that**
• the electrical contacting element (212, 312, 412, 512) has a movable spring arm (208), on which the electrical contact point (213) is arranged, and a movable latching arm (205); and wherein
• the latching arm (205) is designed to lock the spring arm (208) in a first position (304); and wherein
• for forming the contacting of the electrically conductive contact region (202) of the lens (201) with the electrical contact surface (213) of the electrical contacting element (212, 312, 412, 512), the locking of the spring arm (208) in the camera device (200, 300, 400) is designed to be released.

6. Camera device (200, 300, 400) according to Claim 5, wherein the electrical contacting element (212, 312, 412, 512) has a suction surface (209) and a standing surface (206); and wherein a solder connection (401) is formed between the standing surface (206) and the printed circuit board (203), or wherein the standing surface (206) of the electrical contacting element (212, 312, 412, 512) is pressed into the printed circuit board (203).

7. Camera device (200, 300) according to Claim 6, wherein the electrical contacting element (212, 312, 512) has a passage (207) in or in the vicinity of the standing surface (206), and wherein the printed circuit board (203) has at least one through-opening (204), and wherein the electrical contacting element (212, 312, 512) is positioned on the printed circuit board (203) such that the passage (207) and the through-opening (204) adjoin one another.

8. Camera device (400) according to Claim 5 or 6, wherein the printed circuit board (203) has at least one through-opening (403) and wherein the electrical contacting element (412) is mounted on the printed circuit board (203) such that at least a part of the latching arm (205) points through the through-opening (403) to a side facing away from the lens (201).

9. Camera device (200) according to any of Claims 6 to 8, wherein the latching arm (205) and the spring arm (208) of the electrical contacting element (212, 312, 412, 512) are arranged on opposite sides of the standing surface (206) or on adjacent sides of the standing surface (206).

## Revendications

1. Procédé (100) de production d'un dispositif de caméra (200, 300, 400), comprenant les étapes suivantes consistant à :
• fournir (101) une carte de circuit imprimé (203) sur laquelle est disposé un capteur d'imagerie (303) ;
• fixer (102) au moins un élément de contact électrique (212, 312, 412, 512), lequel présente une face de contact électrique (213), sur la carte de circuit imprimé (209) ;
• orienter (103) un objectif (201) par rapport au capteur d'imagerie (303), lequel est reçu dans un boîtier du dispositif de caméra (200, 300, 400) et comporte une région de contact électriquement conductrice (202) ;
• fixer (104) l'objectif (201) dans le boîtier ; et
• mettre en contact (105) la région de contact électriquement conductrice (202) de l'objectif (201) avec la face de contact électrique (213) de l'élément de contact électrique (212, 312, 412, 512) ;
**caractérisé en ce que**
• l'élément de contact électrique (212, 312, 412, 512) comporte un bras de ressort mobile (208), sur lequel est disposé le point de contact électrique (213), et un bras de verrouillage mobile (205) ; et
• le bras de verrouillage (205) verrouillant le bras de ressort (208) dans une première position (304) jusqu'à l'étape de mise en contact (105) ;
• et, lors de l'étape de mise en contact (105), le verrouillage du bras de ressort (208) étant libéré au moyen d'un outil de libération (501) par l'intermédiaire d'une impulsion mécanique temporaire (210) appliquée au bras de verrouillage (205).

2. Procédé (100) selon la revendication 1, dans lequel, lors de l'étape de fixation (102), l'élément de contact électrique (212, 312, 412, 512) est aspiré sur une face d'aspiration (209) de l'élément de contact électrique (212, 312, 412, 512) au moyen d'un outil de montage et est positionné sur une face d'appui (206) de l'élément de contact électrique (212, 312, 412, 512) sur la carte de circuit imprimé (203) ; et dans lequel une liaison par soudure (401) est formée entre la face d'appui (206) et la carte de circuit imprimé (203) ou dans lequel l'élément de contact électrique (212, 312, 412, 512) est inséré à force dans la carte de circuit imprimé (203).

3. Procédé (100) selon la revendication 2, l'élément de contact électrique (212, 312, 512) présentant un passage (207) dans ou au voisinage de la face d'appui (206), et la carte de circuit imprimé (203) présentant au moins une ouverture de passage (204), et l'élément de contact électrique (212, 312, 512) étant positionné sur la carte de circuit imprimé (203) lors de l'étape de fixation (102) de telle sorte que le passage (207) et l'ouverture de passage (204) soient contigus l'un à l'autre ; et, pour déclencher l'impulsion mécanique temporaire (210), l'outil de libération (501) étant inséré, depuis un côté de la carte de circuit imprimé (203) qui est opposé à l'objectif (201), à travers l'ouverture de passage (204) de la carte de circuit imprimé (203) et le passage adjacent (207) de l'élément de contact électrique (212, 312, 512).

4. Procédé (100) selon la revendication 1 ou 2, la carte de circuit imprimé (203) présentant au moins une ouverture de passage (403) et l'élément de contact électrique (412) étant positionné sur la carte de circuit imprimé (203) lors de l'étape de fixation (102) de telle sorte qu'au moins une partie du bras de verrouillage (205) fasse saillie à travers l'ouverture de passage (403) vers un côté opposé à l'objectif (201) ; et, pour déclencher l'impulsion mécanique temporaire (210), l'outil de libération étant déplacé parallèlement à la carte de circuit imprimé (203) sur le côté opposé à l'objectif (201).

5. Dispositif de caméra (200, 300, 400) pour un véhicule, comportant :
• une carte de circuit imprimé (203) sur laquelle est disposé un capteur d'imagerie (303) ;
• au moins un élément de contact électrique (212, 312, 412, 512) monté sur la carte de circuit imprimé (203) et présentant une face de contact électrique (213) ;
• un boîtier ;
• un objectif (201) logé dans le boîtier, orienté vers le capteur d'imagerie (303) et fixé dans le boîtier, lequel comporte une région de contact électriquement conductrice (202) ; et
• la région de contact électriquement conductrice (202) de l'objectif (201) étant configurée de manière à être en contact avec la face de contact électrique (213) de l'élément de contact électrique (212, 312, 412, 512) ;
**caractérisé en ce que**
• l'élément de contact électrique (212, 312, 412, 512) comporte un bras de ressort mobile (208), sur lequel est disposé le point de contact électrique (213), et un bras de verrouillage mobile (205) ; et
• le bras de verrouillage (205) étant conçu pour verrouiller le bras de ressort (208) dans une première position (304) ; et
• le verrouillage du bras de ressort (208) dans le dispositif de caméra (200, 300, 400) étant configuré de manière à être libéré pour établir la mise en contact de la région de contact électriquement conductrice (202) de l'objectif (201) avec la face de contact électrique (213) de l'élément de contact électrique (212, 312, 412, 512).

6. Dispositif de caméra (200, 300, 400) selon la revendication 5, l'élément de contact électrique (212, 312, 412, 512) présentant une face d'aspiration (209) et une face d'appui (206) ; et une liaison par soudure (401) étant formée entre la face d'appui (206) et la carte de circuit imprimé (203), ou la face d'appui (206) de l'élément de contact électrique (212, 312, 412, 512) étant insérée à force dans la carte de circuit imprimé (203).

7. Dispositif de caméra (200, 300) selon la revendication 6, l'élément de contact électrique (212, 312, 512) présentant un passage (207) dans ou au voisinage de la face d'appui (206), et la carte de circuit imprimé (203) présentant au moins une ouverture de passage (204), et l'élément de contact électrique (212, 312, 512) étant positionné sur la carte de circuit imprimé (203) de telle sorte que le passage (207) et l'ouverture de passage (204) soient contigus l'un à l'autre.

8. Dispositif de caméra (400) selon la revendication 5 ou 6, la carte de circuit imprimé (203) présentant au moins une ouverture de passage (403) et l'élément de contact électrique (412) étant fixé à la carte de circuit imprimé (203) de telle sorte qu'au moins une partie du bras de verrouillage (205) fasse saillie à travers l'ouverture de passage (403) vers un côté opposé à l'objectif (201).

9. Dispositif de caméra (200) selon l'une quelconque des revendications 6 à 8, le bras de verrouillage (205) et le bras de ressort (208) de l'élément de contact électrique (212, 312, 412, 512) étant disposés sur des côtés opposés de la face d'appui (206) ou sur des côtés adjacents de la face d'appui (206).
